# EUROPÄISCHE PATENTANMELDUNG

(11) **EP 0 693 647 A1**
(43) Veröffentlichungstag der Anmeldung: **24.01.1996**
(21) Anmeldenummer: 95111246.5
(22) Anmeldetag: 18.07.1995
(51) Int. Cl.: F16K 37/00, F15B 15/28

(54) **Vorrichtung für die Stellungsanzeige bei hydraulisch betätigten Armaturen**

(30) Priorität: 22.07.1994 DE 9411939 U
(71) Anmelder: PAUL PLEIGER, D-58456 Witten (DE)
(72) Erfinder: Marian, Alfred Dieter, D-45549 Sprockhövel (DE); Plaas, Heinrich, D-44227 Dortmund (DE)
(74) Vertreter: Klingseisen, Franz, Dipl.-Ing.

(57) **Zusammenfassung**

Es ist eine Vorrichtung für die Stellungsanzeige bei hydraulisch betätigten Armaturen vorgesehen, die mit einer Vor- und einer Rücklaufleitung zwischen Armatur (1) und einem Steuerventil (7) versehen ist, wobei für die Stellungsanzeige der Armatur eine Volumenmeßeinrichtung (11) jeweils in die Rücklaufleitung geschaltet ist und wobei eine Bypassleitung (13) zwischen Vor- und Rücklaufleitung (2, 3) vorgesehen ist, in der ein Ventil (14) angeordnet ist, das bei Erreichen der Endstellung der Armatur die Bypassleitung freigibt.

## Beschreibung

Die Erfindung betrifft eine Vorrichtung nach dem Oberbegriff des Anspruchs 1.

Werden bei hydraulisch fernbetätigten Armaturen, wie beispielsweise bei Schwenktrieben, die von beiden Seiten mit Druckmedium beaufschlagbar sind, Zwischenstellungen angezeigt, so kann dies über eine Messung des Flüssigkeitsvolumens erfolgen, das in der Vor- oder Rücklaufleitung zu der Armatur durch die Kolbenverstellung verändert wird. Um eine Verfälschung der Anzeige durch das Kompressionsvolumen, speziell der Rohrleitung, auszuschließen, wird das Volumenmeßgerät stets mittels eines hydraulisch betätigten Ventils in die Rücklaufleitung geschaltet. Beim vollständigen Schließen, beispielsweise des Schwenktriebs, wird die Armatur durch ein entsperrbares Rückschlagventil hydraulisch eingespannt. Beim Öffnen kommt das Kompressionsvolumen des eingespannten Hydrauliköles durch das Umschalten des Volumenmeßgeräts in den Rücklauf bereits als gemessene Volumenänderung zur Anzeige, bevor die Armatur beginnt, sich aus der Schließstellung zu bewegen.

Wird von der geschlossenen Stellung der Armatur aus eine Zwischenstellung angefahren und die Armatur in dieser Zwischenstellung gehalten, so ist das eingespannte Flüssigkeitsvolumen geringer, so daß beim erneuten Schließen der Armatur das Volumenmeßgerät diesmal in der anderen Richtung weniger vorauseilt als beim Öffnen der Armatur, und die ursprüngliche Abweichung, die durch das Kompressionsvolumen bedingt ist, nicht wieder vollständig ausgeglichen wird. Dieser an sich unerhebliche Fehler wird jedoch bei jedem erneuten Ansteuern einer Zwischenstellung aus der geschlossenen Stellung heraus aufaddiert, so daß das Volumenmeßgerät die Nullage nicht wieder erreicht, und die Abweichung nicht mehr vernachlässigbar ist.

Der Erfindung liegt die Aufgabe zugrunde, eine Vorrichtung der eingangs angegebenen Art so auszubilden, daß das Volumenmeßgerät mit der Armatur auch dann synchronisiert ist, wenn aus der Schließstellung heraus mehrfach eine Zwischenstellung angesteuert wird.

Diese Aufgabe wird erfindungsgemäß dadurch gelöst, daß bei vollständig geschlossener Armatur ein Bypass zwischen den Steuerleitungen geöffnet wird, der durch den hervorgerufenen Volumenstrom zum Volumenmeßgerät eine Abweichung beseitigt und das Volumenmeßgerät wieder mit der Armatur synchronisiert.

Vorteilhafte Ausgestaltungen der Erfindung sind in der nachfolgenden Beschreibung und in den weiteren Ansprüchen angegeben.

Eine beispielsweise Ausführungsform der Erfindung wird nachfolgend anhand der Zeichnungen näher erläutert. Es zeigen:
- Fig. 1: schematisch die hydraulische Schaltung einer Vorrichtung für die Stellungsanzeige, und
- Fig. 2: einen Teilschnitt durch den Endabschnitt einer Armatur.

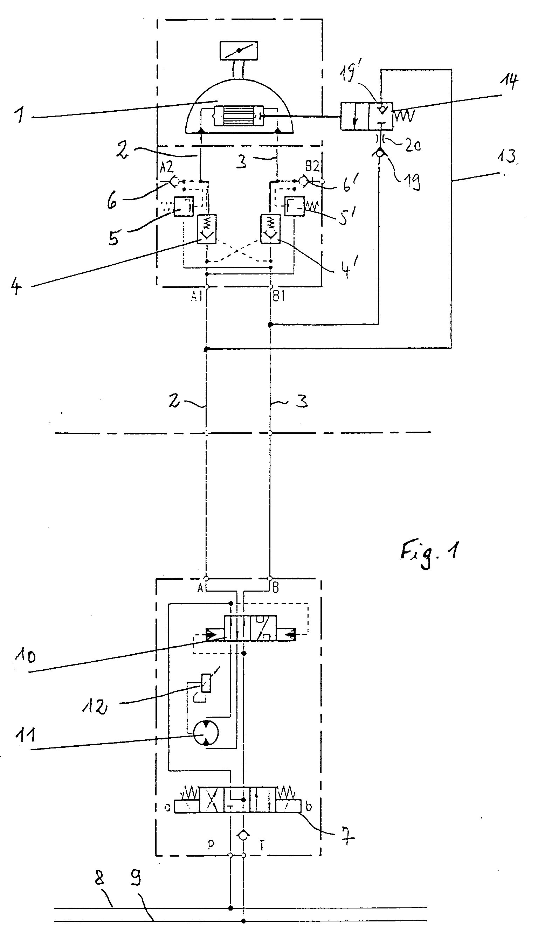

In Fig. 1 ist mit 1 schematisch eine Armatur, beispielsweise ein Schwenktrieb für eine in einer nicht dargestellten Rohrleitung angeordnete Klappe, wiedergegeben, in deren Antriebszylinder ein Kolben beidseitig über Druckmittelleitungen 2 und 3 beaufschlagbar ist. In den beiden Druckmittelleitungen 2, 3 ist jeweils ein Rückschlagventil 4 bzw. 4' angeordnet, das - wie durch gestrichelte Linien angedeutet - durch den Druck in der anderen Leitung entsperrbar ist. Mit 5, 5' sind Druckbegrenzungsventile bezeichnet und mit 6, 6' Anschlüsse mit jeweils einem Rückschlagventil, die eine Beaufschlagung der Armatur mit einem Hilfsaggregat ermöglichen.

Wie durch eine strichpunktierte Linie angedeutet, ist in einer größeren Entfernung von der Armatur eine Steuereinheit mit einem Steuerventil 7 angeordnet, mittels dem der Druck einer Versorgungsleitung 8 an eine der Druckmittelleitung 2, 3 angelegt werden kann, während gleichzeitig die jeweils andere Druckmittelleitung mit der Rücklaufleitung 9 verbunden wird. In der dargestellten Schaltstellung des Steuerventils 7 ist keine der Druckmittelleitungen mit Druck beaufschlagt. In der Steuereinheit ist ein hydraulisch betätigtes Ventil 10 angeordnet, mittels dem ein Volumenmeßgerät 11 jeweils mit der Rücklaufleitung verbunden wird, wenn eine der beiden Druckmittelleitungen 2, 3 durch das Steuerventil 7 in den Rücklauf geschaltet wird. Mit 12 ist eine Anzeigeeinrichtung für die Anzeige der Stellung des Kolbens in der Armatur 1 bezeichnet, wobei die Kolbenstellung der Volumenverschiebung entspricht, die durch das Volumenmeßgerät 11 festgestellt wird. Der bisher beschriebene Aufbau ist an sich bekannt.

Der Kolben in der Armatur 1 wird in der jeweiligen Endstellung durch das Druckmittel eingespannt, das in dem Abschnitt der Druckmittelleitung 2, 3 zwischen entsperrbarem Rückschlagventil 4 und der Armatur 1 vorhanden ist. Hierbei tritt ein gewisses Kompressionsvolumen der Hydraulikflüssigkeit in diesem Abschnitt auf, das beim Anfahren der Armatur aus der jeweiligen Endstellung zunächst freigegeben wird, bevor sich der Kolben in der Armatur bewegt, so daß das Volumenmeßgerät 11 eine gewisse Volumenänderung registriert, bevor sich der Kolben in der Armatur bewegt. Dies führt zu keiner Verfälschung der Stellungsanzeige, wenn jeweils die Endstellungen des Kolbens angefahren werden, weil sich hierbei das Kompressionsvolumen in den beiden Leitungsabschnitten aufhebt.

Werden dagegen immer wieder Zwischenstellungen des Kolbens aus einer Endstellung des Kolbens heraus angefahren, so findet ein derartiger Ausgleich des Kompressionsvolumens nicht statt, und es werden - wenn auch kleine - Fehler durch die auftretende Differenz der Kompressionsvolumina aufaddiert, so daß das Volumenmeßgerät 11 nicht mehr genau die Stellung des Kolbens in der Armatur wiedergibt, wie dies einleitend geschildert wurde.

Um diese Abweichungen zu vermeiden, ist vor den beiden entsperrbaren Rückschlagventilen 4, 4' eine Bypassleitung 13 zwischen den beiden Druckmittelleitungen 2 und 3 angeordnet, die durch ein Ventil 14 absperrbar ist und freigegeben werden kann. Diese Bypassleitung 13 wird geöffnet, wenn sich der Kolben in der Armatur 1 in der Endstellung befindet. Führt beispielsweise die Leitung 2 Druck, während der Kolben in der Armatur 1 die rechte Endstellung erreicht, so wird bei Erreichen der Endstellung die Bypassleitung 13 freigegeben, so daß der Druck in der Leitung 2 über die Bypassleitung in die Rücklaufleitung 3 abgebaut werden kann. Beim Anfahren aus der Endstellung in eine Zwischenstellung tritt somit kein Kompressionsvolumen aus der Druckmittelleitung 2 mehr auf, so daß die Anzeige durch das Volumenmeßgerät 11 nicht mehr verfälscht wird.

Vorteilhafterweise erfolgt die Betätigung des Ventils 14 in der Bypassleitung mechanisch durch den Kolben der Armatur 1, so daß das Ventil 14 nicht von außen gesteuert zu werden braucht.

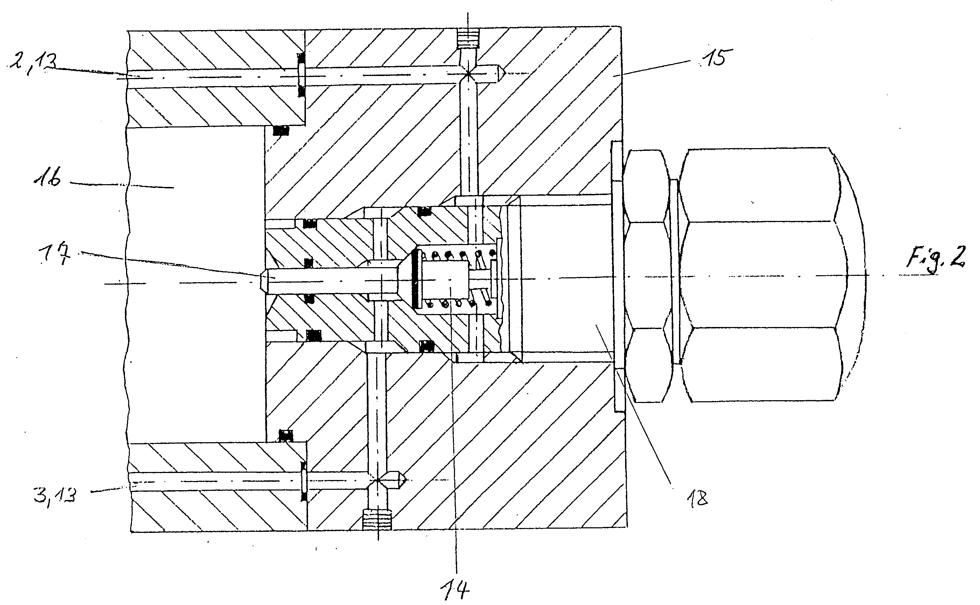

Fig. 2 zeigt ein Ausführungsbeispiel einer derartigen mechanischen Koppelung, wobei das Ventil 14 in den Deckel 15 des Zylinders integriert ist, in dessen Kolbenraum 16 der nicht dargestellte Kolben verschiebbar ist. Mit 2, 13 und 3, 13 sind jeweils Kanäle im Zylinder bezeichnet, die den beiden Druckmittelleitungen 2, 3 und der Bypassleitung 5 der Fig. 1 entsprechen. Das Ventil 14 besteht aus einem in Schließrichtung federbelasteten Ventilstück mit einem Stößel 17, der in den Kolbenraum 16 ragt, so daß der Kolben in der Endstellung über den Stößel 17 das Ventil 14 und damit die Bypassleitung 13 öffnet.

Das Ventil 14 ist bei dem Ausführungsbeispiel nach Fig. 2 in eine Einstellschraube 18 integriert, die zur Justierung der Endlage des Kolbens der Armatur dient, wobei der Ventilkörper mittels der Einstellschraube 18 im Deckel 15 in Achsrichtung verstellbar ist.

Wie Fig. 1 zeigt, wird in der Bypassleitung 13 zweckmäßigerweise jeweils ein Rückschlagventil 19, 19' und eine Drossel 20 vorgesehen. Die Drossel 20 dient für einen allmählichen Volumenausgleich bei Freigabe der Bypassleitung 13.

Bei der in Fig. 1 wiedergegebenen Schaltung wird davon ausgegangen, daß jeweils nur aus der rechten Endstellung des Kolbens Zwischenstellungen angefahren werden. Wenn auch aus der linken Kolbenstellung der Armatur 1 Zwischenstellungen angefahren werden, wird das Ventil 14 auch bei Erreichen der linken Endstellung des Kolbens geöffnet bzw. auf der linken Seite der Armatur 1 ein weiteres Ventil 14 vorgesehen, das durch den Kolben betätigt wird und in der Bypassleitung 13 liegt.

## Patentansprüche

1. Vorrichtung für die Stellungsanzeige bei hydraulisch betätigten Armaturen mit einer Vor- und einer Rücklaufleitung zwischen Armatur (1) und einem Steuerventil (7), wobei für die Stellungsanzeige der Armatur eine Volumenmeßeinrichtung (11) jeweils in die Rücklaufleitung geschaltet ist,
**gekennzeichnet durch**
eine Bypassleitung (13) zwischen Vor- und Rücklaufleitung (2, 3), in der ein Ventil (14) angeordnet ist, das bei Erreichen der Endstellung der Armatur die Bypassleitung freigibt.

2. Vorrichtung nach Anspruch 1,
**dadurch gekennzeichnet,**
daß das Ventil (14) in der Bypassleitung (13) durch den Kolben der Armatur (1) beaufschlagt wird.

3. Vorrichtung nach Anspruch 2,
**dadurch gekennzeichnet,**
daß das Ventil (14) im Zylinderdeckel (15) der Armatur (1) angeordnet ist.

4. Vorrichtung nach den Ansprüchen 2 und 3,
**dadurch gekennzeichnet,**
daß das Ventil (14) in eine Einstellschraube (18) für die Justierung der Endlage des Kolbens integriert ist.
